(19) **Europäisches Patentamt / European Patent Office / Office européen des brevets**

(11) **EP 2 169 821 B1**

(12) **EUROPEAN PATENT SPECIFICATION**

(45) Date of publication and mention
of the grant of the patent:
**21.09.2011   Bulletin 2011/38**

(51) Int Cl.:
*H02P 25/22* (2006.01)    *H02P 9/10* (2006.01)
*H02P 21/00* (2006.01)

(21) Application number: **08165287.7**

(22) Date of filing: **26.09.2008**

(54) **Method and apparatus for dynamic load sharing**

Verfahren und Vorrichtung zur dynamischen Lastaufteilung

Procédé et appareil pour partager un chargement dynamique

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**31.03.2010   Bulletin 2010/13**

(73) Proprietor: **Vestas Wind Systems A/S
8940 Randers SV (DK)**

(72) Inventors:
• **Shu Yu, Cao
Singapore 640695 (SG)**
• **Helle, Lars
9541 Suldrup (DK)**
• **Tripathi, Anshuman
Singapore 680215 (SG)**

• **Larsen, Kim B
Hadsund 9560 (DK)**

(74) Representative: **Johansson, Magnus
Awapatent AB
Box 1066
251 10 Helsingborg (SE)**

(56) References cited:
**EP-A- 1 330 020      JP-A- 1 198 264
US-A- 6 008 616      US-A1- 2003 085 627**

• **R.F. SCHIFERL, C.M. ONG: "Six phase synchronous machine with AC and DC stator connections" IEEE TRANSACTIONS ON POWER APPARATUS AND SYSTEMS, vol. PAS-102, no. 8, August 1983 (1983-08), pages 2694-2701, XP002501722**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The present invention generally relates to multiphase generators, and more specifically to modular generators comprising multiple three phase generators with interleaved windings. The invention further relates to a controller suitable for such generators.

**Background of the invention**

Electric power generators are devices that convert mechanical energy into electrical energy. In an AC generator, the rotor is driven by e.g. a turbine and electric currents are induced in the stator windings of the generator. An AC generator is normally either of a synchronous type or an asynchronous type. For a long time synchronous generators have been used in power systems of different kinds. Synchronous generators are e.g. used both in large power systems, such as nuclear power plants, as well as in small isolated systems, such as wind power plants.

In contrast to the to the asynchronous generator (or induction generator) which uses induction to provide a magnetic flux, the synchronous generator uses either a permanent magnet (PM) or electrical magnetization to produce its magnetization flux. In this respect, the use of permanent magnet generators has found increasing acceptance in recent years, mainly due to the need for inexpensive and reliable excitation components. The application of new permanent magnetic materials has resulted in high-efficiency generators which are superior to other types of generators in many ways.

A synchronous generator normally comprises three phases, but in recent years many investigations related to multiphase generators have been made, a lot of them towards six phase generators. The interest in multiphase generators lies mainly in the fact that with many phases the high currents associated with high power generators can be divided among more phases. Other advantages of multiple phase generators compared to three phase generators are e.g. lower noise levels at the same power level, lower harmonic distortion and lower EMI.

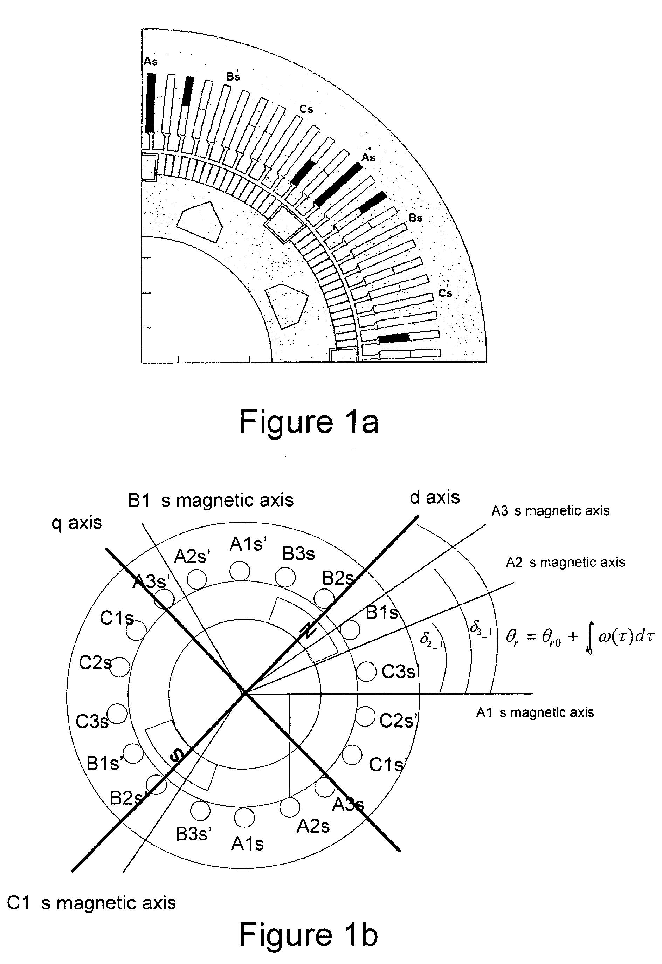

Generators with six or more phase windings are mainly found in full rate wind turbine power conversion application where load sharing and output power distribution among the converter modules as well as output power scalability in low and high wind are desired. One approach to implementation of a multiphase generator, such as a six phase generator, is to use a modular generator, i.e. a generator composed of multiple three phase generators with interleaved windings as illustrated in figure 1a with a six-phase 8-pole PM generator.

The advantages of the modular generator with interleaved winding configuration include (1) The mechanical force is always balanced with respect to the generator shaft and the mechanical stress is evenly distributed over the entire generator structure irrespective of the output power level of individual three phase systems; (2) Identical reluctance in the air gap for each three phase systems, which facilitates identification and measurement of the generator parameters in one set of three phase system for control purpose; (3) Failure of any sub-system does not require the entire power generation system to be shutdown. The reliability and availability of power output is thus improved.

Compared to the operation of a single three phase generator, when operating a modular generator comprising e.g. two or more three phase interleaved windings it is important to take into consideration the dynamic load or power sharing of the different three phase systems. More specifically, for the modular PM generator composed of multiple three phase generators with interleaved windings, a conventional current feedback field oriented control is not sufficient due to the significant magnetic coupling between each three phase system.

The normal way to design a six phase modular generator is to arrange two star connected windings with a 30 electrical degrees phase-shift between the two stars. By this arrangement the 11th and 13th harmonics will be reduced thereby lowering the stress on the generator system. Another way is to split the phase belt of a conventional three-phase machine into two parts with spatial phase separation of 30 electrical degrees. Yet another way is to use a machine with star connected windings and arranging a star-triangle transformer at the output of one generator in order to get a 30 electrical degrees phase-shift between the two generators. However, the first described design is the most common arrangement today.

Document US6008616 describes an apparatus for a pole change induction motor and control method for that motor. The pole change motor is electrically changed between an n number of poles and a 2n number of the poles (n=2, 4, - - -) so as to secure an output torque of the pole change induction motor in a constant driving mode with a high rotation speed of the induction motor without increase in a dimension of either of the induction motor or an inverter associated with the pole change induction motor and without occurrence in a torque variation.

The publication "Six phase synchronous machine with AC and DC stator connections", IEEE 1983, comes to the conclusion that for most operating conditions a displacement angle of 30° between the phases appears to be optimum with respect to voltage harmonic distortion and torque pulsation.

Document US2003085627 describes a multi-phase electric motor with third harmonic current injection. Significantly increased torque is provided from a motor arrangement having a stator with a core and at least two three-phase windings wound on the core. The two windings are separated spatially by 30 electrical degrees. Power is provided to the two windings by two inverters each supplying power at the same fundamental frequency and with a component at the third harmonic of the fundamental, with the power provided from one inverter shifted in time by 30° of the fundamental frequency with respect to the power provided by the other inverter. The additional third harmonic component reduces the effective peak flux density, allowing an increase in the fundamental component of flux to allow an increase in effective torque, with the third harmonic component also providing additional torque.

## Summary of the invention

In view of the above, an objective of the invention is to provide a method for dynamic torque or power sharing of a modular generator system comprising multiple three phase systems with interleaved windings. The modular generator model in the rotor reference d-q frame may be derived and used as the foundation to realize the dynamic load sharing decoupling control. The decoupling control methodology is described as below with six phase generator as an example of application. The method is general and applicable for any multiple three phase modular generator control.

The invention is precisely defined in method claim 1 and corresponding device claim 7. The dependent claims recite advantageous embodiments of the invention.

A torque/power scheduler minimizes the dynamic transition caused by cross magnetic coupling between the three phase systems. The slope change of the torque or power reference signal is limited in the torque/power scheduler. Simultaneous changing of the torque/power reference signals of any two sets of three phase systems is avoided in the torque/power scheduler for dynamic decoupling control purpose. That is, according to the invention it is possible to use the torque/power scheduler to mitigate the dynamic transition caused by cross coupling between the three phase systems by imposing slope limiting on the torque or power reference signals and using a fixed time delay to avoid simultaneous change of the torque or power reference signals of any two sets of three phase systems.

In control system implementation, the rotor flux linkage magnitude and the electrical angular shift between two different three phase systems are identified from the back electromotive force of the generator in open circuit when the machine operates at constant speed. This makes the dynamic decoupling control robust against generator parameter variations. The three phase system angle shift $\delta_{2\_1}$ may be measured as the phase difference of a back electromotive force voltage signal between phase a2 and phase a1 disclosed below. The rotor flux magnitude $\Psi_{mr}$ may be computed as the phase back electromotive force voltage peak value divided by the angular speed $\omega_r$.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

## Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:

Fig 1 a illustrates a six phase, eight pole modular PM generator with interleaved windings. In Fig 1a, phase layout of one three phase system is marked out. The blank stator slots are for the other three phase system that has not been marked out in the figure;

Fig 1b illustrates a nine phase, two pole modular PM generator;

Fig 2 illustrates the profile of inter-phase coupling as a function of the electrical angle shift between two three phase systems;

Figure 3 illustrates a field oriented stator current based feedback dynamic load/power sharing control algorithm according to a first embodiment of the present invention;

Figure 4 illustrates a stator flux based dynamic load/power sharing control algorithm according to a second embodiment of the present invention.

**Detailed description of preferred embodiments**

For a modular PM generator with N set of three phase systems "$a_1b_1c_1$" "$a_2b_2c_2$"... "$a_Nb_Nc_N$", the magnetic flux axis, the rotor position, and angle shift of the three phase systems are defined according to: the d-axis (direct rotor flux axis) is defined as the rotor magnetic flux axis; the q-axis leads d-axis 90° electrical degree in counterclockwise direction; the rotor position angle $\theta_r$ is defined as the angle between d-axis and phase a1 magnetic flux axis of the three phase system $a_1b_1c_1$; $\delta_{m\_1}$ denotes the electrical angle shift between three phase set $a_mb_mc_m$ and three phase set $a_1b_1c_1$;

The above definitions are graphically illustrated in Figure 1b with a nine phase two pole machine.

Assuming a sinusoidal distribution of the stator phase windings, the inductive coupling within one three phase system $a_mb_mc_m$ can be represented as matrix "$L_{ss}$", and the inductive coupling between two set of three phase winding $a_nb_nc_n$ and $a_mb_mc_m$ can be presented as matrix "$LM_{n\_m}$".

$$L_{ss} = \begin{bmatrix} L_{sl} + L_m & -L_m/2 & -L_m/2 \\ -L_m/2 & L_{sl} + L_m & -L_m/2 \\ -L_m/2 & -L_m/2 & L_{sl} + L_m \end{bmatrix}$$

Where, $L_{sl}$ denotes the stator phase leakage inductance; $L_m$ denotes the stator phase mutual inductance;

$$LM_{n\_m} = L_m * \begin{bmatrix} \cos(\delta_{n\_1} - \delta_{m\_1}) & \cos(\delta_{n\_1} - \delta_{m\_1} + 2*\pi/3) & \cos(\delta_{n\_1} - \delta_{m\_1} - 2*\pi/3) \\ \cos(\delta_{n\_1} - \delta_{m\_1} - 2*\pi/3) & \cos(\delta_{n\_1} - \delta_{m\_1}) & \cos(\delta_{n\_1} - \delta_{m\_1} + 2*\pi/3) \\ \cos(\delta_{n\_1} - \delta_{m\_1} + 2*\pi/3) & \cos(\delta_{n\_1} - \delta_{m\_1} - 2*\pi/3) & \cos(\delta_{n\_1} - \delta_{m\_1}) \end{bmatrix}$$

Where, $\delta_{n\_1} - \delta_{m\_1}$ is the angle shift between three phase system $a_nb_nc_n$ and $a_mb_mc_m$.

The phase inductance coupling matrix of the generator can be represented as:

$$L_{a1b1c1\_a2b2c2\_\Lambda\, aNbNcN} = \begin{bmatrix} Lss & LM_{1\_2} & ... & LM_{1\_N} \\ LM_{2\_1} & Lss & ... & LM_{2\_N} \\ ... & ... & ... & ... \\ LM_{N\_1} & LM_{N\_2} & ... & Lss \end{bmatrix}$$

Where, $LM_{m\_n} = LM_{n\_m}^T$

The rotor flux seen from the magnetic flux axis of three phase $a_mb_mc_m$ is:

$$\psi_{r\_a_mb_mc_m} = \psi_{mr} * \begin{bmatrix} \cos(\theta_r - \delta_{m\_1}) \\ \cos(\theta_r - \delta_{m\_1} - 2*\pi/3) \\ \cos(\theta_r - \delta_{m\_1} + 2*\pi/3) \end{bmatrix}$$

Where, $\psi_{mr}$ denotes the magnitude of rotor flux linkage.

The stator flux equation of a 3*N phase modular generator is:

$$\begin{bmatrix} \psi_{a1b1c1} \\ \psi_{a2b2c2} \\ \dots \\ \psi_{aNbNcN} \end{bmatrix} = \begin{bmatrix} Lss & LM_{1\_2} & \dots & LM_{1\_N} \\ LM_{2\_1} & Lss & \dots & LM_{2\_N} \\ \dots & \dots & \dots & \dots \\ LM_{N\_1} & LM_{N\_2} & \dots & Lss \end{bmatrix} * \begin{bmatrix} i_{a1b1c1} \\ i_{a2b2c2} \\ \dots \\ i_{aNbNcN} \end{bmatrix} + \begin{bmatrix} \psi_{r\_a1b1c1} \\ \psi_{r\_a2b2c2} \\ \dots \\ \psi_{r\_aNbNcN} \end{bmatrix}$$

The stator voltage equation of a 3*N phase modular generator is:

$$\begin{bmatrix} u_{a1b1c1} \\ u_{a2b2c2} \\ \dots \\ u_{aNbNcN} \end{bmatrix} = R_s * \begin{bmatrix} i_{a1b1c1} \\ i_{a2b2c2} \\ \dots \\ i_{aNbNcN} \end{bmatrix} + \begin{bmatrix} Lss & LM_{1\_2} & \dots & LM_{1\_N} \\ LM_{2\_1} & Lss & \dots & LM_{2\_N} \\ \dots & \dots & \dots & \dots \\ LM_{N\_1} & LM_{N\_2} & \dots & Lss \end{bmatrix} * \begin{bmatrix} \dfrac{di_{a1b1c1}}{dt} \\ \dfrac{di_{a2b2c2}}{dt} \\ \dots \\ \dfrac{di_{aNbNcN}}{dt} \end{bmatrix} + \begin{bmatrix} \dfrac{d\psi_{r\_a1b1c1}}{dt} \\ \dfrac{d\psi_{r\_a2b2c2}}{dt} \\ \dots \\ \dfrac{d\psi_{r\_aNbNcN}}{dt} \end{bmatrix}$$

In order to implement dynamic decoupling of the load/power sharing a rotor reference d-q frame model of the 3*N phase PM generator is derived. Assuming sinusoidal winding distribution, the phase voltages $ua_mb_mc_m$, phase currents $ia_mb_mc_m$ and stator flux $\Psi a_mb_mc_m$ may be transferred to the rotor reference frame according to:

$$u_{d_mq_m0_m} = K_{sm} * u_{a_mb_mc_m}$$

$$i_{d_mq_m0_m} = K_{sm} * i_{a_mb_mc_m}$$

$$\psi_{d_mq_m0_m} = K_{sm} * \psi_{a_mb_mc_m}$$

where

$$K_{sm} = \frac{2}{3} \begin{bmatrix} \cos(\theta_r - \delta_{m\_1}) & \cos(\theta_r - \delta_{m\_1} - 2*\pi/3) & \cos(\theta_r - \delta_{m\_1} + 2*\pi/3) \\ -\sin(\theta_r - \delta_{m\_1}) & -\sin(\theta_r - \delta_{m\_1} - 2*\pi/3) & -\sin(\theta_r - \delta_{m\_1} + 2*\pi/3) \\ 1/2 & 1/2 & 1/2 \end{bmatrix}$$

The Park transformation matrix of a 3*N phase modular PM generator is:

$$Ks = \begin{bmatrix} K_{s1} & 0 & 0 & 0 \\ 0 & K_{s2} & 0 & 0 \\ 0 & 0 & \dots & 0 \\ 0 & 0 & 0 & K_{sN} \end{bmatrix}$$

The stator flux equation of 3*N phase PM modular generator in rotor reference d-q frame is derived as:

$$\psi_{d1} = (L_{sl} + (3/2) * L_m) * i_{d1} + (3/2) * L_m * \{i_{d2} + i_{d3} + \Lambda \Lambda + i_{dN}\} + \psi_{mr}$$

$$\psi_{q1} = (L_{sl} + (3/2)L_m) * i_{q1} + (3/2) * L_m * \{i_{q2} + i_{q3} + \Lambda \Lambda + i_{qN}\}$$

$$\psi_{dN} = (L_{sl} + (3/2) * L_m) * i_{dN} + (3/2) * L_m * \{i_{d1} + i_{d2} + \Lambda \Lambda + i_{d(N-1)}\} + \psi_{mr}$$

$$\psi_{qN} = (L_{sl} + (3/2) * L_m) * i_{qN} + (3/2) * L_m * \{i_{q1} + i_{q2} + \Lambda \Lambda + i_{q(N-1)}\}$$

The stator voltage equation of the 3*N phase PM modular generator in rotor reference d-q frame is derived as:

$$u_{d1} = R_s * i_{d1} - \omega_r * \{(L_{sL} + (3/2) * L_m) * i_{q1} + (3/2) * L_m * i_{q2} + \Lambda \Lambda + (3/2) * L_m * i_{qN}\}$$
$$+ \left\{ (L_{sL} + (3/2) * L_m) * \frac{di_{d1}}{dt} + (3/2) * L_m * \frac{di_{d2}}{dt} + \Lambda \Lambda + (3/2) * L_m * \frac{di_{dN}}{dt} \right\}$$

$$u_{q1} = R_s * i_{q1} + \omega_r * \{(L_{sL} + (3/2) * L_m) * i_{d1} + (3/2) * L_m * i_{d2} + \Lambda \Lambda + (3/2) * L_m * i_{dN}\}$$
$$+ \left\{ (L_{sL} + (3/2) * L_m) * \frac{di_{q1}}{dt} + (3/2) * L_m * \frac{di_{q2}}{dt} + + \Lambda \Lambda + (3/2) * L_m * \frac{di_{qN}}{dt} \right\} + \psi_{mr} * \omega_r$$

$$u_{dN} = R_s * i_{dN} - \omega_r * \{(L_{sL} + (3/2) * L_m) * i_{qN} + (3/2) * L_m * i_{q1} + \Lambda \Lambda + (3/2) * L_m * i_{q(N-1)}\}$$
$$+ \left\{ (L_{sL} + (3/2) * L_m) * \frac{di_{dN}}{dt} + (3/2) * L_m * \frac{di_{d1}}{dt} + \Lambda \Lambda + (3/2) * L_m * \frac{di_{d(N-1)}}{dt} \right\}$$

$$u_{qN} = R_s * i_{qN} + \omega_r * \{(L_{sL} + (3/2) * L_m) * i_{dN} + (3/2) * L_m * i_{d1} + \Lambda \Lambda + (3/2) * L_m * i_{d(N-1)}\}$$
$$+ \left\{ (L_{sL} + (3/2) * L_m) * \frac{di_{qN}}{dt} + (3/2) * L_m * \frac{di_{q1}}{dt} + \Lambda \Lambda + (3/2) * L_m * \frac{di_{q(N-1)}}{dt} \right\} + \psi_{mr} * \omega_r$$

The electrical torque of a 3*N phase modular PM generator in the stator phase natural reference frame is:

$$Te = \frac{poles}{2} * \begin{bmatrix} i^T_{a1b1c1} & i^T_{a2b2c2} & \cdots & i^T_{aNbNcN} \end{bmatrix} * \begin{bmatrix} \dfrac{\partial \psi_{r\_a1b1c1}}{\partial \theta_r} \\ \dfrac{\partial \psi_{r\_a2b2c2}}{\partial \theta_r} \\ \cdots \\ \dfrac{\partial \psi_{r\_aNbNcN}}{\partial \theta_r} \end{bmatrix}$$

Applying the Park transformation matrix of the 3*N phase modular PM generator to the above torque equation, the electrical torque in the rotor reference d-q frame may be expresses as:

$$Te = \frac{3 * poles}{4} * \psi_{mr} * \sum_{m=1}^{N} i_{qm}$$

The inductance matrix of a six phase PM machine in the natural phase frame is a function of the phase shift angle $\delta_{2\_1}$ between the two set of windings.

$$L_{a1b1c1\_a2b2c2} = \begin{bmatrix} L_{sl} + L_m & -L_m/2 & -L_m/2 & L_m*\cos(\delta_{2\_1}) & L_m*\cos(\delta_{2\_1}+2*\pi/3) & L_m*\cos(\delta_{2\_1}-2*\pi/3) \\ -L_m/2 & L_{sl}+L_m & -L_m/2 & L_m*\cos(\delta_{2\_1}-2*\pi/3) & L_m*\cos(\delta_{2\_1}) & L_m*\cos(\delta_{2\_1}+2*\pi/3) \\ -L_m/2 & -L_m/2 & L_{sl}+L_m & L_m*\cos(\delta_{2\_1}+2*\pi/3) & L_m*\cos(\delta_{2\_1}-2*\pi/3) & L_m*\cos(\delta_{2\_1}) \\ L_m*\cos(\delta_{2\_1}) & L_m*\cos(\delta_{2\_1}-2*\pi/3) & L_m*\cos(\delta_{2\_1}+2*\pi/3) & L_{sl}+L_m & -L_m/2 & -L_m/2 \\ L_m*\cos(\delta_{2\_1}+2*\pi/3) & L_m*\cos(\delta_{2\_1}) & L_m*\cos(\delta_{2\_1}-2*\pi/3) & -L_m/2 & L_{sl}+L_m & -L_m/2 \\ L_m*\cos(\delta_{2\_1}-2*\pi/3) & L_m*\cos(\delta_{2\_1}+2*\pi/3) & L_m*\cos(\delta_{2\_1}) & -L_m/2 & -L_m/2 & L_{sl}+L_m \end{bmatrix}$$

The inter-phase coupling coefficients between the two three phase systems are defined as:

$$coeff_{m1} = \cos(\delta_{2\_1})$$

$$coeff_{m2} = \cos(\delta_{2\_1} + 2 * \pi / 3)$$

$$coeff_{m3} = \cos(\delta_{2\_1} - 2 * \pi / 3)$$

Treating each phase coupling equally important, the total coupling coefficients of the two three phase system is defined as:

$$coeff_{mTotal} = |coeff_{m1}| + |coeff_{m2}| + |coeff_{m3}|$$

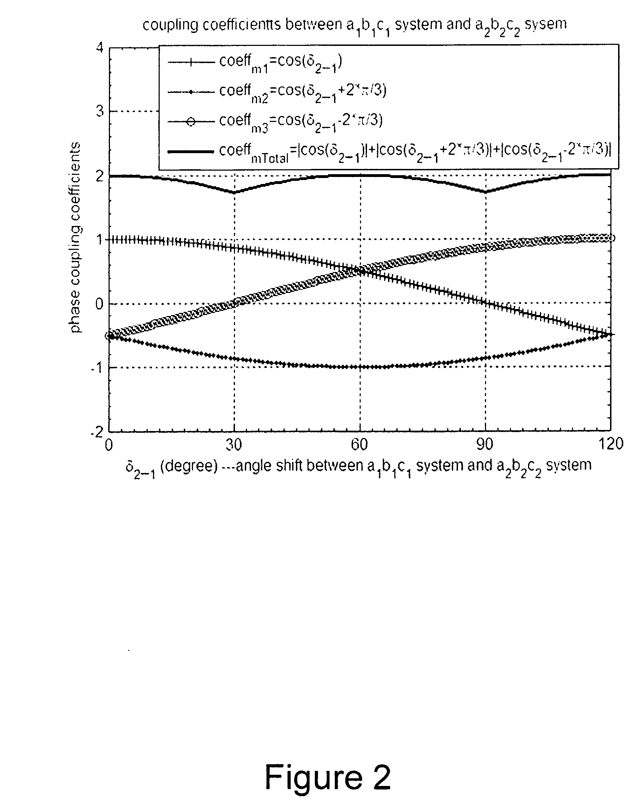

Figure 2 is a graphical presentation of the equations above and illustrates how the inter-phase coupling coefficients $coeff_{m1}$, $coeff_{m2}$, $coeff_{m3}$ and $coeff_{mTotal}$ between the two three phase systems varies in relation to the electrical angle shift $\delta_{2\_1}$ between the two systems.

From the topmost curve it is determined that the minimum total magnetic coupling between the two system is reached at $\delta_{2\_1} = 30°$ and $\delta_{2\_1} = 90°$. Consequently, by arranging the windings at an angle shift of either $\delta_{2\_1} = 30°$ or

$\delta_{2\_1}$ =90° the physical coupling between the two three phase systems will be minimized, thereby minimizing the magnetic circuit saturation due to coupling effects.

For a nine phase modular generator, using similar method of analysis, the minimal physical coupling is achieved at $\delta_{2\_1}$ = 30°, $\delta_{3\_1}$ = 60°, or $\delta_{3\_1}$ =90°.

For a modular generator with more than twelve phases, the coupling exists between any two three phase systems. It is difficult to find a winding layout that can minimize the total physical coupling.

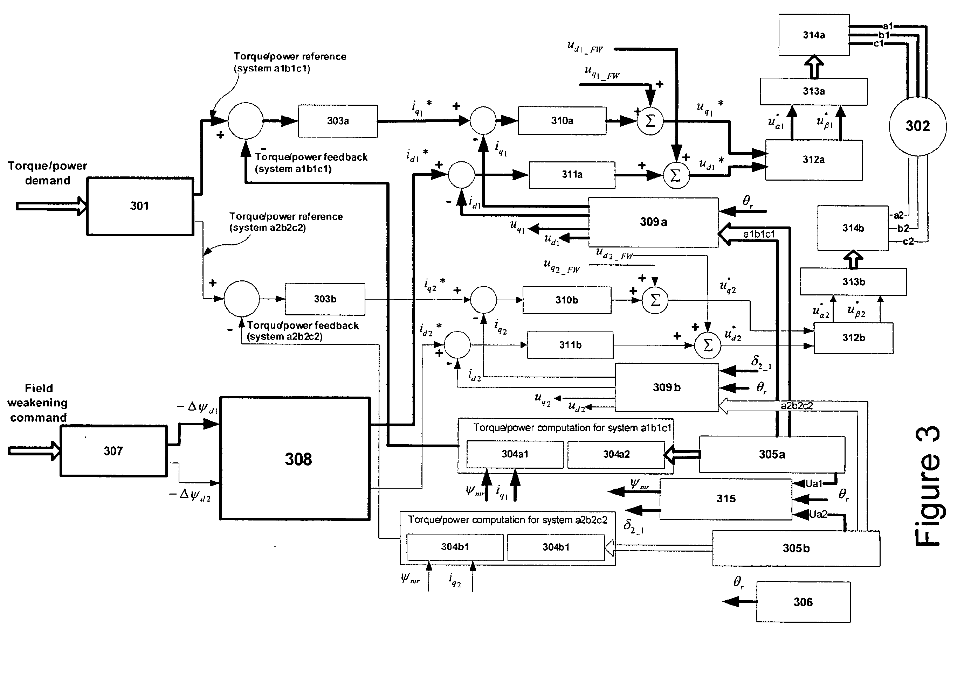

Figure 3 illustrates a field oriented stator current feedback dynamic load/power sharing control algorithm according to a first embodiment of the present invention for realizing dynamic load or power sharing of a modular PM generator composed of multiple three phase systems with interleaved windings. The description below is given for a six phase modular generator as an example of application. The principle and the method is applicable for controlling a dynamic load/power sharing of a modular PM generator with any multiple number of three phase systems for a wind turbine application.

The algorithm shown in the figure is preferably implemented for the for the simplest coupling case with a winding configuration ($\delta_r$) of 90° electrical angle shift between two sets of three phase systems for a six phase, eight pole PM generator as illustrated in Figure 1 a.

In block 315, the angle shift $\delta_{2\_1}$ and the rotor flux $\Psi_{mr}$ are identified from the phase Back electromotive force voltage signals in open circuit condition when generator operates at constant speed. The phase shift electrical angle $\delta_{2\_1}$ is measured as the phase difference of Back electromotive force voltage signals between phase a2 and phase a1. The rotor flux $\Psi_{mr}$ is measured as the result of the phase peak Back electromotive force voltage magnitude ua (*peak*) divided by the generator angular speed $\omega_r$.

Block 305a measures the phase current signals and phase voltage signals of the three phase system $a_1b_1c_1$. Block 305b measures the phase current signals and phase voltage signals of the three phase system $a_2b_2c_2$.

In block 306, the electrical rotor angle is estimated from a position senorless scheme or computed from $\theta_r$ = (*P*/2) * $\theta_m$. The rotor position θ m (i.e. the mechanical angle with zero degree defined as the rotor d-axis aligned with phase a1 flux axis) of the PM machine is measured using a position encoder mounted on the generator shaft.

Block 309a performs the park transformation of the phase current and phase voltage from $a_1b_1c_1$ frame to rotor reference dq frame. The input signals for block 309a are measured phase voltage $ua_1$, $ub_1$ $uc_1$, phase current $ia_1$ $ib_1$ $ic_1$, and rotor position $\theta_r$. The output signals of block 309a are the current and voltage dq component $id_1$ $iq_1$ $ud_1$ $uq_1$ for the three phase system $a_1b_1c_1$. which are used as signals for current control, electrical torque compuation, and voltage feed forward compensation,

Block 309b performs the park transformation of the phase current and voltage from $a_2b_2c_2$ three phase frame to rotor reference dq frame. The input signals for block 309b are measured phase voltage $ua_2$, $ub_2$ $uc_2$, phase current $ia_2$ $ib_2$ $ic_2$, rotor position $\theta_r$, and the angle shift $\delta_{2\_1}$ between the two sets of three phase systems. The output signals of block 309b are the current and voltage dq component $id_2$ $iq_2$ $ud_2$ $uq_2$ for the three phase system $a_2b_2c_2$.

Either torque control or power control is implemented in the wind turbine generator control system. The torque control is realized by transferring the power command into torque command by dividing the power reference by angular speed $\omega_r$, then closing the control loop based on the torque reference and torque feedback signals. The power control is realized by directly closing the power control loop based on the power reference and power feedback signal with appropriate compensation of the loop bandwidth change due to operation speed level.

A torque or power scheduler 301 is responsible for distributing a torque or power demand for a modular generator 302 into two sets of three phase systems. In order to mimimize the dynamic transition caused by the coupling between the two three phase systems, the slope of torque or power demand change should be limited. For the same reason, after a torque or power command change on one set of three phase system, a fixed time delay is inserted before allowing the torque or power command change on the other set of three phase system. In this way, simultaneous change of torque or power command in both three phase systems is avoided.

A torque or power controller 303a for the first system (denoted a1b1c1 in figure 3) generates the q-axis current reference, $i_{q1}$*, based on a torque or power reference provided by the torque or power scheduler 301 and a torque or power feedback provided by the first torque observer 304a1 or the power observer 304a2.

The torque observer 304a1 computes the electrical torque of the first system based on the q-axis current and the rotor flux according to:

$$T_{e1} = (3/4)*poles*\psi_{mr}*i_{q1}$$

The power observer 304a2 computes the generator real power based on the measured stator phase currents and phase voltages according to:

$$P_{e1} = i_{a1} * u_{a1} + i_{b1} * u_{b1} + i_{c1} * u_{c1}$$

A corresponding torque or power controller 303b for the second system (denoted a2b2c2 in figure 3) generates the q-axis current reference, $i_{q2}{}^*$, based on a torque or power reference provided by the torque or power scheduler 301 and a torque or power feedback provided by the torque observer 304b1 or the power observer 304b2 according to:

$$T_{e2} = (3/4) * poles * \psi_{mr} * i_{q2}$$

$$P_{e2} = i_{a2} * u_{a2} + i_{b2} * u_{b2} + i_{c2} * u_{c2}$$

A field weakening scheduler 307 is used to distribute the demagnetization flux components among the two sets of three phase systems. The d-axis current reference signal, $i_{d1}{}^*$, $i_{d2}{}^*$, for each individual three phase system is computed by a d-axis current reference generation block 308 with the coupling effects to other three phase systems included according to

$$\dot{i_{d1}} = -\left\{ \frac{L_{sl} + (3/2) * L_m}{L_{sl} * (L_{sl} + 3 * L_m)} \Delta \dot{\psi}_{d1} - \frac{(3/2) * L_m}{L_{sl} * (L_{sl} + 3 * L_m)} \Delta \dot{\psi}_{d2} \right\}$$

$$\dot{i_{d2}} = -\left\{ \frac{L_{sl} + (3/2) * L_m}{L_{sl} * (L_{sl} + 3 * L_m)} \Delta \dot{\psi}_{d2} - \frac{(3/2) * L_m}{L_{sl} * (L_{sl} + 3 * L_m)} \Delta \dot{\psi}_{d1} \right\}$$

The torque or power scheduler 301 and the field weakening scheduler 307 are responsible for achieving optimal operation of the modular generator 302 and converter systems.

The feedback current signals, $i_{d1}$, $i_{q1}$, $i_{d2}$, $i_{q2}$, are subtracted from the current reference signals, $i_{d1}{}^*$, $i_{q1}{}^*$, $i_{d2}{}^*$, $i_{q2}{}^*$, and provided to a q-axis and d-axis current controller 310a, 311a, and 310b, 311 b for each system respectively. An appropriate voltage feed-forward component $u_{q1\_FW}$, $u_{d1\_FW}$, $u_{q2\_FW}$, $u_{d2\_FW}$ is added to the each corresponding q-axis/d-axis voltage reference, $u_{q1}{}^*$, $u_{d1}{}^*$, $u_{q2}{}^*$, $u_{d2}{}^*$, respectively, in order to compensate the rotational $B_{emf}$ coupling effect from of its own three phase system and the current/voltage coupling effects from the other three phase system according to

$$u_{d1\_FW} = K_{FW} * \frac{(3/2) * L_m}{(L_{sl} + (3/2) * L_m)} * \left\{ u_{d2} - R_s * i_{d2} \right\} - \frac{L_{sl} * (L_{sl} + 3 * L_m)}{(L_{sl} + (3/2) * L_m)} * \omega_r * i_{q1}$$

$$u_{q1\_FW} = K_{FW} * \frac{(3/2) * L_m}{(L_{sl} + (3/2) * L_m)} * \left\{ u_{q2} - R_s * i_{q2} \right\} + \frac{L_{sl} * (L_{sl} + 3 * L_m)}{(L_{sl} + (3/2) * L_m)} * \omega_r * i_{d1} + \frac{L_{sl}}{(L_{sl} + (3/2) * L_m)} * \psi_{mr} * \omega_r$$

$$u_{d2\_FW} = K_{FW} * \frac{(3/2)*L_m}{L_{sl}+(3/2)*L_m} * \{u_{d1} - R_s * i_{d1}\} - \frac{L_{sl}*(L_{sl}+3*L_m)}{(L_{sl}+(3/2)*L_m)} * \omega_r * i_{q2}$$

$$u_{q2\_FW} = K_{FW} * \frac{(3/2)*L_m}{(L_{sl}+(3/2)*L_m)} * \{u_{q1} - R_s * i_{q1}\} + \frac{L_{sl}*(L_{sl}+3*L_m)}{(L_{sl}+(3/2)*L_m)} * \omega_r * i_{d2} + \frac{L_{sl}}{(L_{sl}+(3/2)*L_m)} * \psi_{mr} * \omega_r$$

where, the feed forward gain $0<K_{FW}<1$ is introduced to control the strength of the cross system decoupling signal.

Block 312a transfers the q-axis/d-axis voltage signals, $u_{q1}{}^*$, $u_{d1}{}^*$ to the stator stationary $\alpha1\beta1$ frame for the first three phase system a1b1c1 according to:

$$u_{\alpha1}^* = \cos(\theta_r) * u_{d1}^* - \sin(\theta_r) * u_{q1}^*$$

$$u_{\beta1}^* = \sin(\theta_r) * u_{d1}^* + \sin(\theta_r) * u_{q1}^*$$

$$u_{d2\_FW} = -\frac{(3/2)*L_m}{L_{sl}+(3/2)*L_m} * u_{d1} + \frac{(3/2)*L_m}{L_{sl}+(3/2)*L_m} * R_s * i_{d1} - \frac{L_l*(L_l+3*L_m)}{L_{sl}+(3/2)*L_m} * i_{q2} * (P/2) * \omega_m$$

Block 312b transfer the q-axis/d-axis voltage signals, $u_{q2}{}^*$, $u_{d2}{}^*$, to the stator stationary $\alpha2\beta2$ frame for the second three phase system $a_2b_2c_2$ according to:

$$u_{\alpha2}^* = \cos(\theta_r - \delta_r) * u_{d2}^* - \sin(\theta_r - \delta_r) * u_{q2}^*$$

$$u_{\beta2}^* = \sin(\theta_r - \delta_r) * u_{d2}^* + \sin(\theta_r - \delta_r) * u_{q2}^*$$

The PWM modulators 313a and 313b take the voltage reference in the stator stationary frame as input and generate the gating signals for the PWM converter 314a and 314b respectively. The PWM converter 314a applies the first three phase system voltage ua1, ub1, uc1 to the generator 302. The PWM converter 314b applies the second three phase system voltage ua2, ub2 and uc2 to the generator 302.

The dynamic load sharing between two sets of three phase systems is hence realized by including the coupling effect in the d-axis current reference computation and adding the appropriate decoupling feed-forward voltage compensation in the dq frame voltage reference signal generation

The principle of the decoupling method above can be applied to support any physical angle shift between the three phase systems. Other implementation methods for any multiple three phase modular PM generator can also be developed based on the principle illustrated using the six phase generator.

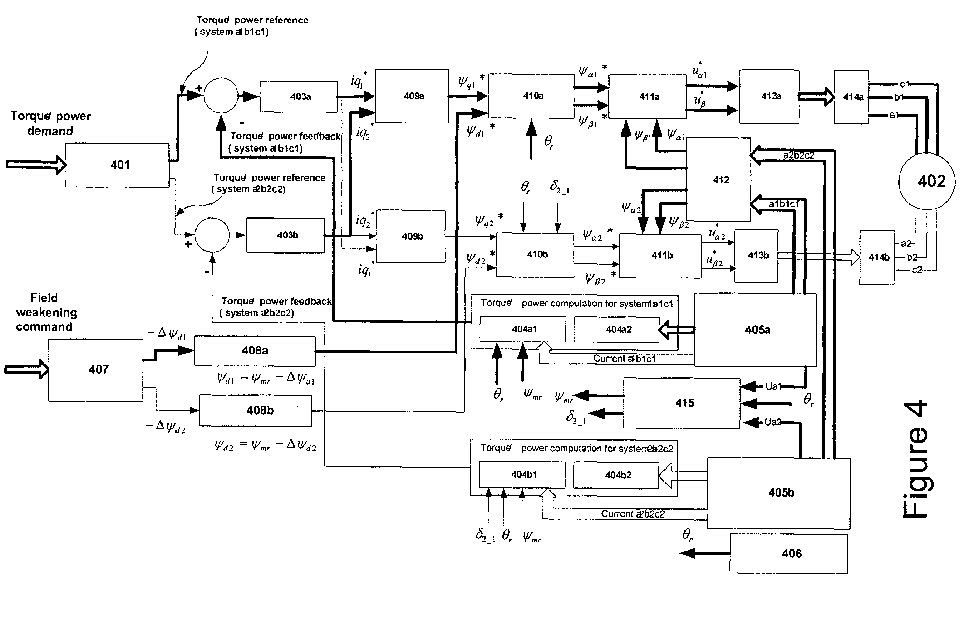

Figure 4 illustrates a stator flux vector control based dynamic load/power sharing algorithm according to a second embodiment of the present invention for realizing dynamic load or power sharing of a modular PM generator composed of multiple three phase systems with interleaved windings. The algorithm may be used for controlling a dynamic load/power sharing of a modular PM generator arranged in a wind turbine.

The algorithm shown in the figure is preferably implemented for a six phase PM generator as illustrated in Figure 1a. The principle can be applied to stator flux vector control based load/power sharing of any multiple three phase modular generator.

In block 415, the angle shift $\delta_{2\_1}$ and the rotor flux $\Psi_{mr}$ are identified from the phase Bemf voltage signals in the generator open circuit and constant speed operation condition. The phase shift electrical angle $\delta_{2\_1}$ is measured as the phase angle difference of Bemf voltage signals between phase a2 and phase a1. The rotor flux $\Psi_{mr}$ is measured as the phase peak bemf voltage magnitude $ua1$ ($peak$) divided by the generator angular speed $\omega_r$.

Block 405a measures the phase current signals and phase voltage signals of the three phase system $a_1b_1c_1$. Block 405b measures the phase current signals and phase voltage signals of the three phase system $a_2b_2c_2$.

In block 406, the electrical rotor angle is estimated from a position senorless scheme or computed from $\theta_r = (P\,/\,2) * \theta_m$. The rotor position $\theta_m$ (i.e. the mechanical angle with zero degree defined as the rotor d-axis aligned with phase a1 flux axis) of the PM machine is measured using a position encoder mounted on the generator shaft.

Either torque control or power control is implemented in the wind turbine generator control system. The torque control is realized by transferring the power command into torque command by dividing the power reference by angular speed $\omega_r$ then closing the control loop based on the torque reference and torque feedback signals. The power control is realized by directly closing the power control loop based on the power reference and power feedback signal with appropriate compensation of the loop bandwidth change due to operation speed level.

A torque or power scheduler 401 is responsible for distributing a torque or power demand for a modular generator 402 into two sets of three phase systems. In order to mimimize the dynamic transition caused by the coupling between the two three phase systems, the slope of torque or power demand change should be limited. For same reason, after a torque or power command change on one set of three phase system, a fixed time delay is inserted before allowing the torque or power command change on the other set of three phase system. In this way, simultaneous change of torque or power command in both three phase systems is avoided.

A torque or power controller 403a for the first system (denoted a1b1c1 in figure 4) generates the q-axis current reference, $i_{q1}{}^{*}$, based on a torque or power reference provided by the torque or power scheduler 401 and a torque or power feedback provided by a first torque observer 404a1 or a power observer 404a2.

The torque observer 404a1 is provided with current/voltage measurements from the current and voltage measurement block 405a and rotor position from the rotor position measurement block 406. The output of torque observer is computed according to

$$T_{e1} = -(poles\,/\,2)*\psi_{mr}*\left\{i_{a1}*\sin(\theta_r) + i_{b1}*\sin(\theta_r - 2*\pi/3) + i_{c1}*\sin(\theta_r + 2*\pi/3)\right\}$$

The power observer 404a2 is provided with current/voltage measurements from the current and voltage measurement block 405a. The output of the power observer 404a2 is computed according to

$$P_{e1} = i_{a1}*u_{a1} + i_{b1}*u_{b1} + i_{c1}*u_{c1}$$

A corresponding torque or power controller 403b for the second system (denoted a2b2c2 in figure 4) generates the q-axis current reference, $i_{q2}{}^{*}$, based on a torque or power reference provided by the torque or power scheduler 401 and a torque or power feedback provided by a torque observer 404b1 or power observer 404b2. The torque observer 404b1 or power observer 404b2 is built in a similar way as the torque observer 404a1 or power observer 404a2. The inputs of torque observer 404b1 are the phase current measurement from block 405b, the rotor position measurement from block 406, and three phase system shift angle $\delta_{2\_1}$ from block 415. The output of the torque observer 404b1 is computed according to:

$$T_{e2} = -(poles\,/\,2)*\psi_{mr}*\left\{i_{a2}*\sin(\theta_r - \delta_r) + i_{b2}*\sin(\theta_r - \delta_r - 2*\pi/3) + i_{c2}*\sin(\theta_r - \delta_r + 2*\pi/3)\right\}$$

The inputs of power observer 404b2 are the phase current and phase voltage measurement from block 405b. The output of the torque observer 404b2 is computed according to

$$P_{e2} = i_{a2} * u_{a2} + i_{b2} * u_{b2} + i_{c2} * u_{c2}$$

A field weakening scheduler 407 is used to distribute the demagnetization stator flux components among the two sets of three phase systems. The d-axis stator flux references, $\Psi_{d1}$, $\Psi_{d2}$, are generated by a first and second d-axis stator flux computation block, 408a, 408b, for each three phase system according to:

$$\psi_{d1}{}^{\bullet} = \psi_{mr} - \Delta\psi_{d1}{}^{\bullet}$$

$$\psi_{d2}{}^{\bullet} = \psi_{mr} - \Delta\psi_{d2}{}^{\bullet}$$

In normal operation, the demagnetization flux components are set to zero ($\Delta\Psi_{d1} = \Delta\Psi_{d2} = 0$).

The torque or power scheduler 401 and the field weakening scheduler 407 are responsible for achieving optimal operation of the modular generator 402 and converter systems.

The q-axis current references, $i_{q1}^*$, $i_{q2}^*$, from two sets of systems are used by a first and second q-axis stator flux computation block, 409a, 409b, to generate a q-axis stator flux reference, $\Psi_{q1}$, $\Psi_{q2}$, for each three phase system. The computation includes the coupling from the other three phase system according to

$$\psi_{q1}{}^{\bullet} = (L_{sl} + \frac{3}{2}L_m) * i_{q1}{}^{\bullet} + \frac{3}{2} * L_m * i_{q2}{}^{\bullet}$$

$$\psi_{q2}{}^{\bullet} = (L_{sl} + \frac{3}{2}L_m) * i_{q2}{}^{\bullet} + \frac{3}{2} * L_m * i_{q1}{}^{\bullet}$$

Blocks 410a and 410b transfer the q-axis stator flux reference, $\Psi_{q1}$, $\Psi_{q2}$, and d-axis stator flux reference $\Psi_{d1}$, $\Psi_{d2}$, for each three phase system into the corresponding first three phase system stator stationary $\alpha1\beta1$ frame and second three phase system stator stationary $\alpha2\beta2$ frame respectively

For the first three phase system the transformed stator flux reference is calculated according to

$$\psi_{\alpha1}^{\bullet} = \cos(\theta_r) * \psi_{d1}^{\bullet} - \sin(\theta_r) * \psi_{q1}^{\bullet}$$

$$\psi_{\beta1}^{\bullet} = \sin(\theta_r) * \psi_{d1}^{\bullet} + \sin(\theta_r) * \psi_{q1}^{\bullet}$$

and for the second three phase system

$$\psi_{\alpha2}^{\bullet} = \cos(\theta_r - \delta_r) * \psi_{d2}^{\bullet} - \sin(\theta_r - \delta_r) * \psi_{q2}^{\bullet}$$

$$\psi_{\beta 2}^{*} = \sin(\theta_r - \delta_r) * \psi_{d2}^{*} + \sin(\theta_r - \delta_r) * \psi_{q2}^{*}$$

The transformed stator flux reference signals $\Psi_{\alpha 1}{}^{*}$, $\Psi_{\beta 1}{}^{*}$ and $\Psi_{\alpha 2}{}^{*}$, $\Psi_{\beta 2}{}^{*}$, respectively, are then provided to a stator flux oriented controller block 411a, 411 b for each system.

The stator flux oriented controller blocks 411a, 411b also receives stator flux feedback signals, $\Psi_{\alpha 1}$, $\Psi_{\beta 1}$ and $\Psi_{\alpha 2}$, $\Psi_{\beta 2}$, from a stator flux observer 412. One preferred embodiment of the stator flux observer 412 is voltage mode flux observer, with which the stator flux is measured directly by integration of the phase voltage after removing the phase resistance voltage drop according to equation given below. The other possible embodiment of stator flux observer 412 is a current mode flux observer, which can be build based on the stator flux equation of a modular generator.

$$u_{\alpha 1} = (2/3) * \left\{ u_{a1} - (1/2) * u_{b1} - (1/2) * u_{c1} \right\}$$

$$u_{\beta 1} = (2/3) * \left\{ (\sqrt{3}/2) * u_{b1} - (\sqrt{3}/2) * u_{c1} \right\}$$

$$i_{\alpha 1} = (2/3) * \left\{ i_{a1} - (1/2) * i_{b1} - (1/2) * i_{c1} \right\}$$

$$i_{\beta 1} = (2/3) * \left\{ (\sqrt{3}/2) * i_{b1} - (\sqrt{3}/2) * i_{c1} \right\}$$

$$\psi_{\alpha 1} = \int (u_{\alpha 1} - i_{\alpha 1} * Rs) dt$$

$$\psi_{\beta 1} = \int (u_{\beta 1} - i_{\beta 1} * Rs) dt$$

and

$$u_{\alpha 2} = (2/3) * \left\{ u_{a2} - (1/2) * u_{b2} - (1/2) * u_{c2} \right\}$$

$$u_{\beta 2} = (2/3) * \left\{ (\sqrt{3}/2) * u_{b2} - (\sqrt{3}/2) * u_{c2} \right\}$$

$$i_{\alpha 2} = (2/3) * \left\{ i_{a2} - (1/2) * i_{b2} - (1/2) * i_{c2} \right\}$$

$$i_{\beta 2} = (2/3) * \left\{ (\sqrt{3}/2) * i_{b2} - (\sqrt{3}/2) * i_{c2} \right\}$$

$$\psi_{\alpha 2} = \int (u_{\alpha 2} - i_{\alpha 2} * Rs) dt$$

$$\psi_{\beta 2} = \int (u_{\beta 2} - i_{\beta 2} * Rs) dt$$

The outputs of stator flux controller block 411 a is a stator voltage reference for the first three phase system a1b1c1 in the stator stationary $\alpha 1\beta 1$ frame which are computed according to the below equation, where $T_{PWM}$ is the PWM switching period.

$$u_{\alpha 1}^{*} = \frac{\psi_{\alpha 1}^{*} - \psi_{a1}}{T_{PWM}}$$

$$u_{\beta 1}^{*} = \frac{\psi_{\beta 1}^{*} - \psi_{\beta 1}}{T_{PWM}}$$

The outputs of stator flux controller block 411 b is a stator voltage reference for the second three phase system a2b2c2 in the stator stationary $\alpha 2\beta 2$ framel, which are computated according to

$$u_{\alpha 2}^{*} = \frac{\psi_{\alpha 2}^{*} - \psi_{a2}}{T_{PWM}}$$

$$u_{\beta 2}^{*} = \frac{\psi_{\beta 2}^{*} - \psi_{\beta 2}}{T_{PWM}}$$

The outputs, $u_{\alpha 1}^{*}$, $u_{\beta 1}^{*}$ and $u_{\alpha 2}^{*}$, $u_{\beta 2}^{*}$, from stator flux controller blocks 411a, 411b are fed into the PWM modulators 413a, 413b for each three phase system. The PWM modulators 413a and 413b generate the gating signals for the PWM converter 414a and 414b respectively. The PWM converter 414a applies the first three phase system voltage ua1, ub1, uc1 to the generator 402. The PWM converter 414b applies the second three phase system ua2, ub2 and uc2 to the generator 402.

The dynamic load sharing between two sets of three phase systems is hence realized by including the coupling effect in the stator flux reference vector generation.

The principle of the decoupling method above can be applied to support any physical angle shift between three phase systems of the generator. Other implementation methods can also be developed based on the principle illustrated in Figure 4 for the modular generator with any multiple three phase systems..

The invention has mainly been described above with reference to a few embodiments. However, as is readily appreciated by a person skilled in the art, other embodiments than the ones disclosed above are equally possible within the scope of the invention, as defined by the appended patent claims. The illustrations of embodiment are given for the 6-phase PM modular generator, However, the method can be applied for any 3*N phase PM modular generators using the dq frame flux equation, voltage equation and torque equation that have been presented in the disclosure.

**Claims**

1. A method for providing load sharing between a first and a second three phase system, said first and second three phase system being connected to a first and second three phase interleaved winding in a generator (302), the method comprising
   determining a first q-axis control signal for the first three phase system and a second q-axis control signal for the second three phase system based on a torque or power demand for the generator,
   determining a first d-axis control signal for the first three phase system $(a_1,b_1,c_1)$ and a second d-axis control signal for the second three phase system $(a_2,b_2,c_2)$ based on a coupling effect between the first and second three phase systems, and
   adjusting the q-axis control signals and d-axis control signals by including at least one feed forward compensation signal, wherein said at least one feed forward compensation signal is based on a coupling effect between the first and second three phase systems, thereby minimising the magnetic circuit saturation due to the coupling effects.

2. The method according to claim 1, wherein the first q-axis control signal for the first three phase system and the second q-axis control signal for the second three phase system are based on a torque or power feedback control of each individual three phase systems of the generator.

3. The method according to claim 1, comprising
   determining a demagnetization flux component from the first three phase system and a demagnetization flux component from the second three phase system,
   determining the first and second d-axis control signals based on said determined demagnetization flux component from the first three phase system and said demagnetization flux component from the second three phase system, and
   generating a first and second d-axis current reference signal based on said first and second d-axis control signals.

4. The method according to any of claims 1 - 3, comprising
   determining at least one generator parameter,
   determining the first and second d-axis control signals based on said at least one generator parameter, and
   generating a first and second d-axis current reference signal based on said first and second d-axis control signals.

5. The method according to any preceding claim, comprising
   determining the feed forward compensation signal for the first three phase system based on a d-axis stator voltage feedback signal from the second three phase system and a d-axis current feedback signal from the second three phase system, and
   generating a d-axis stator voltage feed forward compensation signal based on said feed forward compensation signal.

6. The method according to any preceding claim,
   determining the feed forward compensation signal for the first three phase system based on a q-axis stator voltage feedback signal from the second three phase system and a q-axis current feedback signal from the second three phase system, and
   generating a q-axis stator voltage feed forward compensation signal based on said feed forward compensation signal.

7. A generator system comprising
   a modular generator (302) comprising a first and second stator three phase interleaved winding, wherein the second interleaved winding $(A_2,B_2,C_2)$ is shifted an electrical angle $(\delta_{2\text{-}1})$ with respect to the first three phase winding $(A_1, B_1,C_1)$,
   a first and a second three phase system connected to said first and second three phase interleaved winding,
   a torque/power controller block arranged to determine a first q-axis control signal for the first three phase system and a second q-axis control signal for the second three phase system based on a torque and/or power demand for the generator,
   a d-axis controller block arranged to determine a first d-axis control signal for the first three phase system $(a_1,b_1, c_1)$ and a second d-axis control signal for the second three phase system $(a_2,b_2,c_2)$ based on a coupling effect between the first and second three phase systems, and
   a feed forward compensation block arranged to adjust the q-axis control signals and d-axis control signals by including at least one feed forward compensation signal, wherein said at least one feed forward compensation signal is based on a coupling effect between the first and second three phase systems, thereby minimising the magnetic circuit saturation due to the coupling effects and realising a dynamic load sharing decoupling control.

8. The generator system according to claim 7, wherein the torque/power controller block is arranged to determine the first q-axis control signal for the first three phase system and the second q-axis control signal for the second three phase system based on a torque or power feedback control of each individual three phase systems of the generator.

9. The generator system according to claim 7, comprising
a field weakening block adapted to determine a demagnetization flux component from the first three phase system and a demagnetization flux component from the second three phase system,
a current reference signal block adapted to determine the first and second d-axis control signals based on said determined demagnetization flux component from the first three phase system and said demagnetization flux component from the second three phase system and generate a first and second d-axis current reference signal based on said first and second d-axis control signals.

10. The generator system according to any of claims 7 - 9, comprising
a current reference signal block adapted to determine the first and second d-axis control signals based on said at least one generator parameter, and generate a first and second d-axis current reference signal based on said first and second d-axis control signals.

11. The generator system according to any of claims 7-10, comprising
a transformation block adapted to determine the feed forward compensation signal for the first three phase system based on a d-axis stator voltage feedback signal from the second three phase system and a d-axis current feedback signal from the second three phase system, and generate a d-axis stator voltage feed forward compensation signal based on said feed forward compensation signal.

12. The generator system according to any of claims 7-11, comprising
a transformation block adapted to determine the feed forward compensation signal for the first three phase system based on a q-axis stator voltage feedback signal from the second three phase system and a q-axis current feedback signal from the second three phase system, and generate a q-axis stator voltage feed forward compensation signal based on said feed forward compensation signal.

13. The generator system according to claim 7, comprising a six phase modular generator comprising
a first three phase winding,
a second three phase winding interleaved with the first three phase winding and phase shifted at an electrical angle between 70° and 110° from the first three phase winding.

14. The generator system according to claim 7, comprising a nine phase modular generator comprising
a first three phase winding,
a second three phase winding interleaved with the first three phase winding and phase shifted at an electrical angle between 10° and 50° from the first three phase winding,
a third three phase winding interleaved with the first and second three phase windings and phase shifted at an electrical angle between 40° and 80° or between 70° and 110° from the first three phase winding.

**Patentansprüche**

1. Verfahren zum Bereitstellen einer Lastaufteilung zwischen einem ersten und einem zweiten Dreiphasensystem, wobei das erste und zweite Dreiphasensystem angeschlossen sind an eine erste und zweite Dreiphasenscheibenwicklung in einem Generator (302), wobei das Verfahren umfasst
Bestimmen eines ersten q-Achsen-Steuerungssignals für das erste Dreiphasensystem und eines zweiten q-Achsen-Steuerungssignals für das zweite Dreiphasensystem auf Basis eines Drehmoment- oder Leistungsbedarfs für den Generator,
Bestimmen eines ersten d-Achsen-Steuerungssignals für das erste Dreiphasensystem ($a_1$, $b_1$, $c_1$) und eines zweiten d-Achsen-Steuerungssignals für das zweite Dreiphasensystem ($a_2$, $b_2$, $c_2$) auf Basis eines Kopplungseffekts zwischen dem ersten und zweiten Dreiphasensystem und
Abstimmen der q-Achsen-Steuerungssignale und der d-Achsen-Steuerungssignale durch Einbeziehen mindestens eines Mitkopplungskompensationssignals, wobei das mindestens eine Mitkopplungskompensationssignal auf einem Kopplungseffekt zwischen dem ersten und zweiten Dreiphasensystem beruht, wodurch die Magnetkreissättigung infolge der Kopplungseffekte minimiert wird.

**2.** Verfahren nach Anspruch 1, wobei das erste q-Achsen-Steuerungssignal für das erste Dreiphasensystem und das zweite q-Achsen-Steuerungssignal für das zweite Dreiphasensystem auf einer Drehmoment- oder Leistungsrückkopplungssteuerung eines jeden einzelnen Dreiphasensystems des Generators beruhen.

**3.** Verfahren nach Anspruch 1, mit dem
Bestimmen einer Entmagnetisierungsflusskomponente vom ersten Dreiphasensystem und einer Entmagnetisierungsflusskomponente vom zweiten Dreiphasensystem,
Bestimmen des ersten und zweiten d-Achsen-Steuerungssignals auf Basis der bestimmten Entmagnetisierungsflusskomponente vom ersten Dreiphasensystem und der Entmagnetisierungsflusskomponente vom zweiten Dreiphasensystem und
Erzeugen eines ersten und zweiten d-Achsen-Stromreferenzsignals auf Basis des ersten und zweiten d-Achsen-Steuerungssignals.

**4.** Verfahren nach einem der Ansprüche 1 - 3, mit dem
Bestimmen mindestens eines Generatorparameters,
Bestimmen des ersten und zweiten d-Achsen-Steuerungssignals auf Basis des mindestens einen Generatorparameters und
Erzeugen eines ersten und zweiten d-Achsen-Stromreferenzsignals auf Basis des ersten und zweiten d-Achsen-Steuerungssignals.

**5.** Verfahren nach einem der vorherigen Ansprüche, mit dem
Bestimmen des Mitkopplungskompensationssignals für das erste Dreiphasensystem auf Basis eines d-Achsen-Statorspannungsrückkopplungssignals vom zweiten Dreiphasensystem und eines d-Achsen-Stromrückkopplungssignals vom zweiten Dreiphasensystem und
Erzeugen eines d-Achsen-Statorspannungsmitkopplungs-Kompensationssignals auf Basis des Mitkopplungskompensationssignals.

**6.** Verfahren nach einem der vorherigen Ansprüche, mit dem
Bestimmen des Mitkopplungskompensationssignals für das erste Dreiphasensystem auf Basis eines q-Achsen-Statorspannungsrückkopplungssignals vom zweiten Dreiphasensystem und eines q-Achsen-Stromrückkopplungssignals vom zweiten Dreiphasensystem und
Erzeugen eines q-Achsen-Statorspannungsmitkopplungs-Kompensationssignals auf Basis des Mitkopplungskompensationssignals.

**7.** Generatorsystem mit
einem modularen Generator (302), der eine erste und zweite Stator-Dreiphasenscheibenwicklung aufweist, wobei die zweite Scheibenwicklung ($A_2$, $B_2$, $C_2$) mit Bezug auf die erste Dreiphasenwicklung ($A_1$, $B_1$, $C_1$) um einen elek-trischen Winkel ($\delta_{2-1}$) verschoben ist,
einem ersten und einem zweiten Dreiphasensystem, das an die erste und zweite Dreiphasenscheibenwicklung angeschlossen ist,
einem Drehmoment/Leistungs-Steuerungsblock, der eingerichtet ist, ein erstes q-Achsen-Steuerungssignal für das erste Dreiphasensystem und ein zweites q-Achsen-Steuerungssignals für das zweite Dreiphasensystem auf Basis eines Drehmoment- und/oder Leistungsbedarfs für den Generator zu bestimmen,
einem d-Achsen-Steuerungsblock, der eingerichtet ist, ein erstes d-Achsen-Steuerungssignal für das erste Drei-phasensystem ($a_1$, $b_1$, $c_1$) und ein zweites d-Achsen-Steuerungssignal für das zweite Dreiphasensystem ($a_2$, $b_2$, $c_2$) auf Basis eines Kopplungseffekts zwischen dem ersten und zweiten Dreiphasensystem zu bestimmen, und
einem Mitkopplungskompensationsblock, der eingerichtet ist, die q-Achsen-Steuerungssignale und die d-Achsen-Steuerungssignale durch Einbeziehen mindestens eines Mitkopplungskompensationssignals abzustimmen, wobei das mindestens eine Mitkopplungskompensationssignal auf einem Kopplungseffekt zwischen dem ersten und zweiten Dreiphasensystem beruht, wodurch die Magnetkreissättigung infolge der Kopplungseffekte minimiert und eine Entkopplungssteuerung der dynamischen Lastenaufteilung realisiert wird.

**8.** Generatorsystem nach Anspruch 7, wobei der
Drehmoment/Leistungssteuerungsblock eingerichtet ist, das erste q-Achsen-Steuerungssignal für das erste Dreiphasensystem und das zweite q-Achsen-Steuerungssignal für das zweite Dreiphasensystem auf Basis einer Drehmoment- oder Leistungsrückkopplungssteuerung eines jedes einzelnen Dreiphasensystems des Generators zu bestimmen.

**9.** Generatorsystem nach Anspruch 7 mit
einem Feldschwächungsblock, der geeignet ist, eine Entmagnetisierungsflusskomponente vom ersten Dreiphasensystem und eine Entmagnetisierungsflusskomponente vom zweiten Dreiphasensystem zu bestimmen,
einem Stromreferenzsignalblock, der geeignet ist, das erste und zweite d-Achsen-Steuerungssignal auf Basis der bestimmten Entmagnetisierungsflusskomponente vom ersten Dreiphasensystem und der Entmagnetisierungsflusskomponente vom zweiten Dreiphasensystem zu bestimmen und ein erstes und zweites d-Achsen-Stromreferenzsignal auf Basis des ersten und zweiten d-Achsen-Steuerungssignals zu erzeugen.

**10.** Generatorsystem nach einem der Ansprüche 7 - 9 mit
einem Stromreferenzsignalblock, der geeignet ist, das erste und zweite d-Achsen-Steuerungssignal auf Basis des mindestens einen Generatorparameters zu bestimmen und ein erstes und zweites d-Achsen-Stromreferenzsignal auf Basis des ersten und zweiten d-Achsen-Steuerungssignals zu erzeugen.

**11.** Generatorsystem nach einem der Ansprüche 7 - 10 mit
einem Transformationsblock, der geeignet ist, das Mitkopplungskompensationssignal für das erste Dreiphasensystem auf Basis eines d-Achsen-Statorspannungsrückkopplungssignals vom zweiten Dreiphasensystem und eines d-Achsen-Stromrückkopplungssignals vom zweiten Dreiphasensystem zu bestimmen und ein d-Achsen-Statorspannungsmitkopplungs-Kompensationssignal auf Basis des Mitkopplungskompensationssignals zu erzeugen.

**12.** Generatorsystem nach einem der Ansprüche 7 - 11 mit
einem Transformationsblock, der geeignet ist, das Mitkopplungskompensationssignal für das erste Dreiphasensystem auf Basis eines q-Achsen-Statorspannungsrückkopplungssignals vom zweiten Dreiphasensystem und eines q-Achsen-Stromrückkopplungssignals vom zweiten Dreiphasensystem zu bestimmen und ein q-Achsen-Statorspannungsmitkopplungs-Kompensationssignal auf Basis des Mitkopplungskompensationssignals zu erzeugen.

**13.** Generatorsystem nach Anspruch 7 mit einem modularen Sechsphasengenerator mit
einer ersten Dreiphasenwicklung,
einer zweiten Dreiphasenwicklung, die mit der ersten Dreiphasenwicklung überlappt und gegenüber der ersten Dreiphasenwicklung um einen elektrischen Winkel zwischen 70° und 110° phasenverschoben ist.

**14.** Generatorsystem nach Anspruch 7 mit einem modularen Neunphasengenerator mit
einer ersten Dreiphasenwicklung,
einer zweiten Dreiphasenwicklung, die mit der ersten Dreiphasenwicklung überlappt und gegenüber der ersten Dreiphasenwicklung um einen elektrischen Winkel zwischen 10° und 50° phasenverschoben ist,
einer dritten Dreiphasenwicklung, die mit der ersten und zweiten Dreiphasenwicklung überlappt und gegenüber der ersten Dreiphasenwicklung um einen elektrischen Winkel zwischen 40° und 80° oder zwischen 70° und 110° phasenverschoben ist.

**Revendications**

**1.** Procédé destiné à assurer un partage de charge entre un premier système triphasé et un second système triphasé, lesdits premier et second systèmes triphasés étant reliés à des premier et second enroulements triphasés entrelacés dans un générateur (302), le procédé comprenant :

la détermination d'un premier signal de commande d'axe q pour le premier système triphasé et d'un second signal de commande d'axe q pour le second système triphasé sur la base d'une demande de couple ou de puissance pour le générateur,
la détermination d'un premier signal de commande d'axe d pour le premier système triphasé ($a_1$, $b_1$, $c_1$) et d'un second signal de commande d'axe d pour le second système triphasé ($a_2$, $b_2$, $c_2$) sur la base d'un effet de couplage entre les premier et second systèmes triphasés, et
l'ajustement des signaux de commande d'axe q et des signaux de commande d'axe d en incluant au moins un signal de compensation à action anticipée, dans lequel ledit au moins un signal de compensation à action anticipée est basé sur un effet de couplage entre les premier et second systèmes triphasés, en minimisant de ce fait la saturation de circuit magnétique due aux effets de couplage.

**2.** Procédé selon la revendication 1, dans lequel le premier signal de commande d'axe q pour le premier système triphasé et le second signal de commande d'axe q pour le second système triphasé sont basés sur une commande de rétroaction de couple ou de puissance de chaque système triphasé individuel du générateur.

**3.** Procédé selon la revendication 1, comprenant :

la détermination d'une composante de flux de démagnétisation du premier système triphasé et d'une composante de flux de démagnétisation du second système triphasé,
la détermination des premier et second signaux de commande d'axe d sur la base de ladite composante de flux de démagnétisation déterminée du premier système triphasé et de ladite composante de flux de démagnétisation du second système triphasé, et
la génération de premier et second signaux de référence de courant d'axe d sur la base desdits premier et second signaux de commande d'axe d.

**4.** Procédé selon l'une quelconque des revendications 1 à 3, comprenant :

la détermination d'au moins un paramètre de générateur,
la détermination des premier et second signaux de commande d'axe d sur la base dudit au moins un paramètre de générateur, et
la génération de premier et second signaux de référence de courant d'axe d sur la base desdits premier et second signaux de commande d'axe d.

**5.** Procédé selon l'une quelconque des revendications précédentes, comprenant :

la détermination du signal de compensation à action anticipée pour le premier système triphasé sur la base d'un signal de rétroaction de tension de stator d'axe d du second système triphasé, et d'un signal de rétroaction de courant d'axe d du second système triphasé, et
la génération d'un signal de compensation à action anticipée de tension de stator d'axe d sur la base dudit signal de compensation à action anticipée.

**6.** Procédé selon l'une quelconque des revendications précédentes, comprenant :

la détermination du signal de compensation à action anticipée pour le premier système triphasé sur la base d'un signal de rétroaction de tension de stator d'axe q du second système triphasé, et d'un signal de rétroaction de courant d'axe q du second système triphasé, et
la génération d'un signal de compensation à action anticipée de tension de stator d'axe q sur la base dudit signal de compensation à action anticipée.

**7.** Système de générateur comprenant :

un générateur modulaire (302) comprenant des premier et second enroulements triphasés entrelacés de stator, dans lequel le second enroulement entrelacé ($A_2$, $B_2$, $C_2$) est décalé d'un angle électrique ($\delta2-1$) par rapport au premier enroulement triphasé ($A_1$, $B_1$, $C_1$),
des premier et second systèmes triphasés reliés aux dits premier et second enroulements triphasés entrelacés,
un bloc de contrôleur de couple/puissance agencé pour effectuer la détermination d'un premier signal de commande d'axe q pour le premier système triphasé et d'un second signal de commande d'axe q pour le second système triphasé sur la base d'une demande de couple et/ou de puissance pour le générateur,
un bloc de contrôleur d'axe d agencé pour effectuer la détermination d'un premier signal de commande d'axe d pour le premier système triphasé ($a_1$, $b_1$, $c_1$) et d'un second signal de commande d'axe d pour le second système triphasé ($a_2$, $b_2$, $c_2$) sur la base d'un effet de couplage entre les premier et second systèmes triphasés, et
un bloc de compensation à action anticipée agencé pour effectuer l'ajustement des signaux de commande d'axe q et des signaux de commande d'axe d en incluant au moins un signal de compensation à action anticipée, dans lequel ledit au moins un signal de compensation à action anticipée est basé sur un effet de couplage entre les premier et second systèmes triphasés, en minimisant de ce fait la saturation de circuit magnétique due aux effets de couplage et en réalisant de ce fait une commande de découplage de partage de charge dynamique.

**8.** Système de générateur selon la revendication 7, dans lequel le bloc de contrôleur de couple/puissance est agencé pour effectuer la détermination du premier signal de commande d'axe q pour le premier système triphasé et du second signal de commande d'axe q pour le second système triphasé sur la base d'une commande de rétroaction de couple ou de puissance de chaque système triphasé individuel du générateur.

**9.** Système de générateur selon la revendication 7, comprenant :

un bloc d'affaiblissement de champ apte à effectuer la détermination d'une composante de flux de démagnétisation du premier système triphasé et d'une composante de flux de démagnétisation du second système triphasé,
un bloc de signal de référence de courant apte à effectuer la détermination des premier et second signaux de commande d'axe d sur la base de ladite composante de flux de démagnétisation déterminée du premier système triphasé et de ladite composante de flux de démagnétisation du second système triphasé, et à effectuer la génération de premier et second signaux de référence de courant d'axe d sur la base desdits premier et second signaux de commande d'axe d.

**10.** Système de générateur selon l'une quelconque des revendications 7 à 9, comprenant :

un bloc de signal de référence de courant apte à effectuer la détermination des premier et second signaux de commande d'axe d sur la base dudit au moins un paramètre de générateur, et à effectuer la génération de premier et second signaux de référence de courant d'axe d sur la base desdits premier et second signaux de commande d'axe d.

**11.** Système de générateur selon l'une quelconque des revendications 7 à 10, comprenant :

un bloc de transformation apte à effectuer la détermination du signal de compensation à action anticipée pour le premier système triphasé sur la base d'un signal de rétroaction de tension de stator d'axe d du second système triphasé, et d'un signal de rétroaction de courant d'axe d du second système triphasé, et à effectuer la génération d'un signal de compensation à action anticipée de tension de stator d'axe d sur la base dudit signal de compensation à action anticipée.

**12.** Système de générateur selon l'une quelconque des revendications 7 à 11, comprenant :

un bloc de transformation apte à effectuer la détermination du signal de compensation à action anticipée pour le premier système triphasé sur la base d'un signal de rétroaction de tension de stator d'axe q du second système triphasé, et d'un signal de rétroaction de courant d'axe q du second système triphasé, et à effectuer la génération d'un signal de compensation à action anticipée de tension de stator d'axe q sur la base dudit signal de compensation à action anticipée.

**13.** Système de générateur selon la revendication 7, comprenant un générateur modulaire à six phases comprenant :

un premier enroulement triphasé,
un second enroulement triphasé entrelacé avec le premier enroulement triphasé et à décalage de phase d'un angle électrique entre 70° et 110° par rapport au premier enroulement triphasé.

**14.** Système de générateur selon la revendication 7, comprenant un générateur modulaire à neuf phases comprenant :

un premier enroulement triphasé,
un deuxième enroulement triphasé entrelacé avec le premier enroulement triphasé et à décalage de phase d'un angle électrique entre 10° et 50° par rapport au premier enroulement triphasé,
un troisième enroulement triphasé entrelacé avec le premier enroulement triphasé et le deuxième enroulement triphasé et à décalage de phase d'un angle électrique entre 40° et 80° ou entre 70° et 110° par rapport au premier enroulement triphasé.

# Figure 1a

$$\theta_r = \theta_{r0} + \int_0^t \omega(\tau)d\tau$$

# Figure 1b

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6008616 A

- US 2003085627 A